# EUROPEAN PATENT SPECIFICATION

(11) **EP 3 451 560 B1**
(45) Date of publication and mention of the grant of the patent: **25.03.2020**
(21) Application number: 16901971.8
(22) Date of filing: 17.05.2016
(51) Int. Cl.: H04L 1/00, H04L 5/00

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 06.03.2019
(73) Proprietor: Huawei Technologies Co., Ltd., Longgang District Shenzhen, Guangdong 518129 (CN)
(72) Inventor: XU, Bin, Shenzhen Guangdong 518129 (CN); HU, Xiaoqun, Shenzhen Guangdong 518129 (CN)
(74) Representative: Gill Jennings & Every LLP
(86) International application number: PCT/CN2016/082388
(87) International publication number: WO 2017/197586

(56) References cited:
- CN-A- 101 925 112
- CN-A- 102 957 500
- CN-A- 102 957 500
- CN-A- 104 735 787
- US-A1- 2011 194 485
- ZTE CORPORATION ET AL: "On forward compatibility for new radio interface", 3GPP DRAFT; R1-164292 ON FORWARD COMPATIBILITY FOR NEW RADIO INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Nanjing, China; 20160523 - 20160527 14 May 2016 (2016-05-14), XP051090009, Retrieved from the Internet: URL:http://www.3gpp.org/ftp/tsg_ran/WG1_RL 1/TSGR1_85/Docs/ [retrieved on 2016-05-14]

## Description

### TECHNICAL FIELD

The present disclosure relates to the communications field, and in particular, to a data transmission method and apparatus.

### BACKGROUND

In a time division duplex (Time Division Duplex, TDD) standard of a wireless cellular communications system based on orthogonal frequency division multiplexing (Orthogonal Frequency Division Multiplexing, OFDM), a base station usually schedules uplink/downlink data in a data scheduling area and schedules uplink/downlink control information in a control information scheduling area. This may cause a waste of resources of the control information scheduling area and lead to low data transmission efficiency.

CN102957500 relates to a kind of method of transfer of data, terminal and network equipment.

### SUMMARY

In view of this, the present disclosure provides a solution to effectively utilize control channel resources.

Various aspects of the present disclosure have been defined in the independent claims. Further technical features of each of these aspects have been defined in the respective dependent claims. The invention is defined by the appended claims. The embodiments that do not fully fall under the scope of the claims have to be interpreted as examples useful for understanding the invention.

Based on certain aspects of the present disclosure, using a remaining resource of the control information scheduling area for data transmission can effectively utilize control channel resources and improve data transmission efficiency.

Based on certain aspects of the present disclosure, when resources of the data scheduling area are insufficient, using a remaining resource of the control information scheduling area for data transmission avoids a waste of control channel resources and improves data transmission efficiency.

Based on certain aspects of the present disclosure, the downlink data is transmitted after the indication information, so that the user equipment can obtain the downlink data through one blind detection.

Based on certain aspects of the present disclosure, sufficient control channel resources are configured, so that control information transmission is no longer a bottleneck.

Based on certain aspects of the present disclosure, sending important signaling always in the downlink control information scheduling area can reduce an access delay of the user equipment.

In the present disclosure, names of the base station and the user equipment do not constitute any limitation on the devices themselves, and in actual implementation, these devices may appear in another name.

These aspects or other aspects of the present disclosure are more concise and easy to understand in the following description of the aspects.

### BRIEF DESCRIPTION OF DRAWINGS

To describe the technical solutions in the aspects of the present disclosure more clearly, the following briefly describes the accompanying drawings required for describing the aspects of the present disclosure. Apparently, the accompanying drawings in the following description show merely some aspects of the present disclosure, and a person of ordinary skill in the art may derive other drawings from these accompanying drawings without creative efforts.
FIG. 1 is a schematic architectural diagram of a communications system according to an aspect of the present disclosure;
FIG. 2(a) is a working principle diagram of an OFDM-based transmitter, and FIG. 2(b) is a working principle diagram of an OFDM-based receiver;
FIG. 3 is a frame structure in a TDD standard of an OFDM-based wireless cellular communications system;
FIG. 4 is a schematic block diagram of a data transmission method according to an aspect of the present disclosure;
FIG. 5 is a schematic flowchart of a data transmission method according to an aspect of the present disclosure;
FIG. 6 is another schematic flowchart of a data transmission method according to an aspect of the present disclosure;
FIG. 7 is another schematic block diagram of a data transmission method according to an aspect of the present disclosure;
FIG. 8 is a schematic block diagram of a data transmission apparatus according to an aspect of the present disclosure;
FIG. 9 is another schematic block diagram of a data transmission apparatus according to an aspect of the present disclosure;
FIG. 10 is still another schematic block diagram of a data transmission apparatus according to an aspect of the present disclosure; and
FIG. 11 is still another schematic block diagram of a data transmission apparatus according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are a part rather than all of the aspects of the present disclosure. All other aspects obtained by a person of ordinary skill in the art based on the aspects of the present disclosure without creative efforts shall fall within the protection scope of the present disclosure.

It should be understood that the technical solutions of the aspects of the present disclosure may be applied to various communications systems, for example, a Global System for Mobile Communications (Global System for Mobile Communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunications System, "UMTS" for short), a Worldwide Interoperability for Microwave Access (Worldwide Interoperability for Microwave Access, "WiMAX" for short) communications system, or a future 5G system.

In particular, the technical solutions of the aspects of the present disclosure may be applied to various communications systems based on a non-orthogonal multiple access technology, for example, a sparse code multiple access (Sparse Code Multiple Access, "SCMA" for short) system and a low density signature (Low Density Signature, "LDS" for short) system. Certainly, the SCMA system and the LDS system may alternatively be called other names in the communications field. Further, the technical solutions of the aspects of the present disclosure may be applied to a multi-carrier transmission system using the non-orthogonal multiple access technology, for example, a system that uses orthogonal frequency division multiplexing (Orthogonal Frequency Division Multiplexing, "OFDM" for short) of the non-orthogonal multiple access technology, filter bank multicarrier (Filter Bank Multi-Carrier, "FBMC" for short), generalized frequency division multiplexing (Generalized Frequency Division Multiplexing, "GFDM" for short), or filtered orthogonal frequency division multiplexing (Filtered-OFDM, "F-OFDM" for short).

It should also be understood that in the aspects of the present disclosure, a terminal device may communicate with one or more core networks by using a radio access network (Radio Access Network, "RAN" for short). The terminal device may be referred to as an access terminal, user equipment (User Equipment, "UE" for short), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device with a wireless communication function, a computing device or another processing device connected to a wireless modem, an in-vehicle device, a wearable device, or a terminal device in a future 5G network.

It should also be understood that in the aspects of the present disclosure, a network device may be configured to communicate with the terminal device. The network device may be a base transceiver station (Base Transceiver Station, "BTS" for short) in a Global System for Mobile Communications (Global System for Mobile Communications, "GSM" for short) system or Code Division Multiple Access (Code Division Multiple Access, "CDMA" for short), may be a NodeB (NodeB, "NB" for short) in a Wideband Code Division Multiple Access (Wideband Code Division Multiple Access, "WCDMA" for short) system, or may be an evolved NodeB (evolved NodeB, "eNB" or "eNodeB" for short) in a Long Term Evolution (Long Term Evolution, "LTE" for short) system. Alternatively, the network device may be a relay station, an access point, an in-vehicle device, a wearable device, a base station device in a future 5G (5th-Generation) network, or the like.

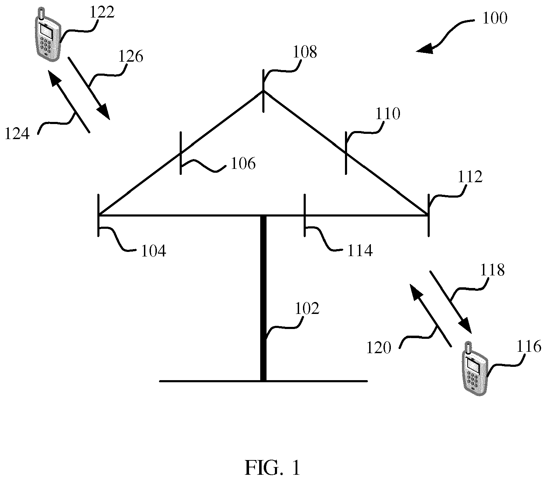

FIG. 1 shows a schematic architectural diagram of a communications system to which an aspect of the present disclosure is applied. As shown in FIG. 1, the communications system 100 may include a network device 102. The network device 102 may include one or more antenna groups, and each antenna group may include one or more antennas. For example, one antenna group may include antennas 104 and 106, another antenna group may include antennas 108 and 110, and an additional group may include antennas 112 and 114. Although two antennas are shown in FIG. 1 for each antenna group, it should be understood that each antenna group may have more or fewer antennas. The network device 102 may additionally include a transmitter chain and a receiver chain. A person of ordinary skill in the art can understand that both the transmitter chain and the receiver chain may include a plurality of components related to signal transmission and reception (for example, a processor, a modulator, a multiplexer, a demodulator, a demultiplexer, or an antenna).

The network device 102 may communicate with a plurality of terminal devices (such as a terminal device 116 and a terminal device 122). However, it can be understood that the network device 102 may communicate with any quantity of terminal devices similar to the terminal device 116 or 122. The terminal devices 116 and 122 may be, for example, cellular phones, smart phones, portable computers, handheld communications devices, handheld computing devices, satellite radio apparatuses, global positioning systems, PDAs, and/or any other appropriate devices for communication in the wireless communications system 100.

As shown in FIG. 1, the terminal device 116 communicates with the antennas 112 and 114. The antennas 112 and 114 send information to the terminal device 116 by using a forward link 118 and receive information from the terminal device 116 by using a reverse link 120. In addition, the terminal device 122 communicates with the antennas 104 and 106. The antennas 104 and 106 send information to the terminal device 122 by using a forward link 124 and receive information from the terminal device 122 by using a reverse link 126.

For example, in a frequency division duplex (Frequency Division Duplex, "FDD" for short) system, the forward link 118 may use a frequency band different from that of the reverse link 120, and the forward link 124 may use a frequency band different from that of the reverse link 126. For another example, in a time division duplex (Time Division Duplex, "TDD" for short) system and a full duplex (Full Duplex) system, the forward link 118 and the reverse link 120 may use a same frequency band, and the forward link 124 and the reverse link 126 may also use a same frequency band.

Each group of antennas and/or an area that are/is designed for communication is referred to as a sector of the network device 102. For example, the antenna group may be designed to communicate with the terminal device in a sector within a coverage area of the network device 102. In a process in which the network device 102 communicates with the terminal devices 116 and 122 by using the forward links 118 and 124, respectively, a transmit antenna of the network device 102 may use beamforming to improve a signal-to-noise ratio of the forward links 118 and 124. In addition, compared with a manner in which a network device sends signals to all terminal devices of the network device by using a single antenna, a mobile device in a neighboring cell receives less interference when the network device 102 sends signals to the randomly distributed terminal devices 116 and 122 in a related coverage area through beamforming.

At a specified time, the network device 102, the terminal device 116, or the terminal device 122 may be a wireless communications transmit apparatus and/or a wireless communications receive apparatus. When data is to be sent, the wireless communications transmit apparatus may encode the data for transmission. Specifically, the wireless communications transmit apparatus may obtain (for example, generate, receive from another communications apparatus, or store in a memory) a specific quantity of data bits to be sent to the wireless communications receive apparatus through a channel. Such data bits may be included in a transport block (or a plurality of transport blocks) of the data, and the transport block may be segmented into a plurality of code blocks.

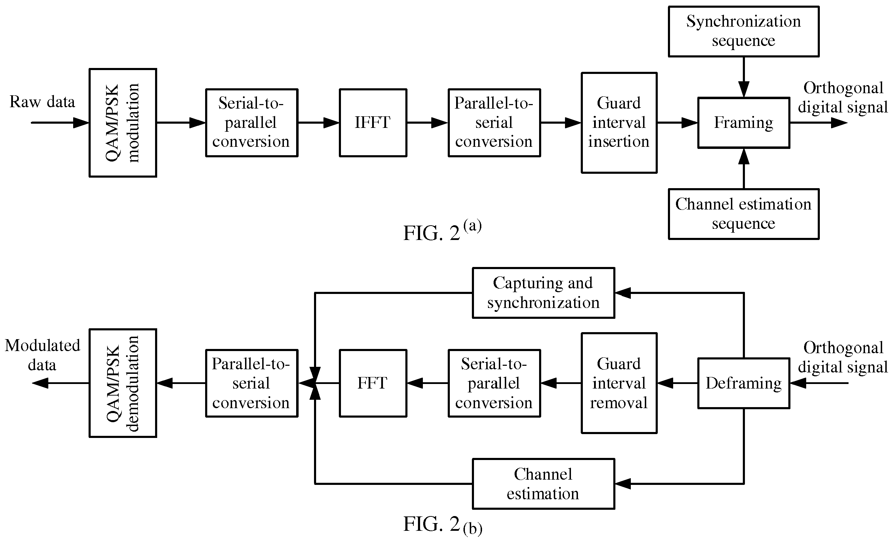

FIG. 1 shows a communications system to which an aspect of the present disclosure is applied. The following briefly describes a principle and a basic model of an OFDM system with reference to FIG. 2.

Orthogonal frequency division multiplexing OFDM is a multi-carrier modulation scheme that reduces and eliminates impact of intercode crosstalk, so as to overcome frequency selective fading of a channel. A basic principle of OFDM is to divide a signal into N subsignals, and then modulate N mutually orthogonal subcarriers by using the N subsignals, respectively. Spectrums of subcarriers overlap with each other; therefore, higher spectrum resources can be obtained, and OFDM has been widely applied to the wireless communications field in recent years.

FIG. 2 shows a schematic diagram of OFDM baseband signal processing. FIG. 2(a) is a working principle diagram of a transmitter, and FIG. 2(b) is a working principle diagram of a receiver. A transmit end first performs quadrature amplitude modulation (Quadrature Amplitude Modulation, QAM) or quadrature phase shift keying (Quadrature Phase Shift Keying, QPSK) modulation on a bit stream, then sequentially performs serial-to-parallel transformation and inverse fast Fourier transformation (Inverse Fast Fourier Transformation, IFFT) on the bit stream, and then converts parallel data into serial data and adds guard intervals (also referred to as "cyclic prefixes") to form OFDM code elements. When framing is performed, a synchronization sequence and a channel estimation sequence need to be added, so that a receive end performs burst detection, synchronization, and channel estimation, and finally outputs an orthogonal baseband signal. When detecting arrival of a signal, the receiver first performs synchronization and channel estimation. After time synchronization and fractional frequency offset estimation and correction are completed, fast Fourier transformation (Fast Fourier Transformation, FFT) and integer frequency offset estimation and correction are performed. In this case, obtained data is QAM- or QPSK-modulated data. The data is correspondingly demodulated, to obtain the bit stream.

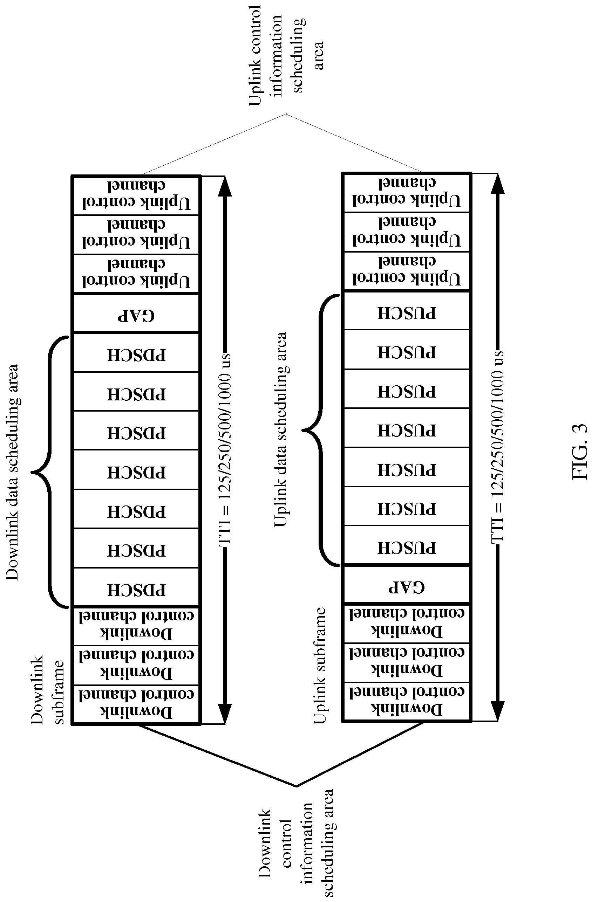

FIG. 3 is a frame structure in a TDD standard of an OFDM-based wireless cellular communications system. A self contained frame structure includes two subframe types: a self contained subframe type 1 (downlink subframe) and a self contained subframe type 2 (uplink subframe). As shown in FIG. 3, the downlink subframe includes the following several parts of content:
a downlink control channel: mainly used to transmit downlink control information (Downlink Control Information, DCI) and acknowledgment feedback information (Acknowledgement, ACK) of a physical hybrid automatic repeat request indicator channel (Physical Hybrid Automatic Repeat Request Indicator Channel);
a physical downlink shared channel (Physical Downlink Shared Channel, PDSCH): mainly used to transmit downlink data;
a gap GAP part: mainly used to reserve a time for switching between uplink and downlink data transmission; and
an uplink control channel: mainly used to transmit uplink control information (Uplink Control Information, UCI) and a sounding reference signal (Sounding Reference Signal, SRS).

The uplink subframe includes the following several parts of content:
a downlink control channel: mainly used to transmit DCI and a PHICH ACK, where a quantity of symbols occupied by the downlink control channel may be the same as that occupied by the downlink control channel in the downlink subframe;
a gap GAP part: mainly used to reserve a time for switching between uplink and downlink data transmission;
a physical uplink shared channel (Physical Uplink Shared Channel, PUSCH): mainly used to transmit uplink data; and
an uplink control channel: mainly used to transmit UCI and an SRS, where a quantity of occupied symbols occupied by the uplink control channel may be the same as that occupied by the uplink control channel in the downlink subframe.

Usually, the quantity of OFDM symbols occupied by the downlink control channel and that occupied by the uplink control channel are configurable parameters. For example, in a TDD standard of an LTE system, a physical downlink control channel (Physical Downlink Control Channel, PDCCH) usually uses the first one to three OFDM symbols of a subframe to transmit downlink control information. If an excessively small quantity of symbols is configured, when there are a relatively large quantity of UEs in the system, control signaling may be insufficient. If an excessively large quantity of symbols is configured, when there are a relatively small quantity of UEs in the system, a waste of control channel resources may occur. This reduces data transmission efficiency of an Enhanced Mobile Broadband (enhanced Mobile Broadband, eMBB) service.

It should be understood that the communications system is a wireless cellular communications system. For example, the system is based on an orthogonal frequency division multiplexing technology. The network device is, for example, a base station. The terminal device is, for example, user equipment. It should be understood that the communications system using the OFDM technology, the base station, and the user equipment are merely used as examples for description in the aspects of the present disclosure. The aspects of the present disclosure are not limited thereto.

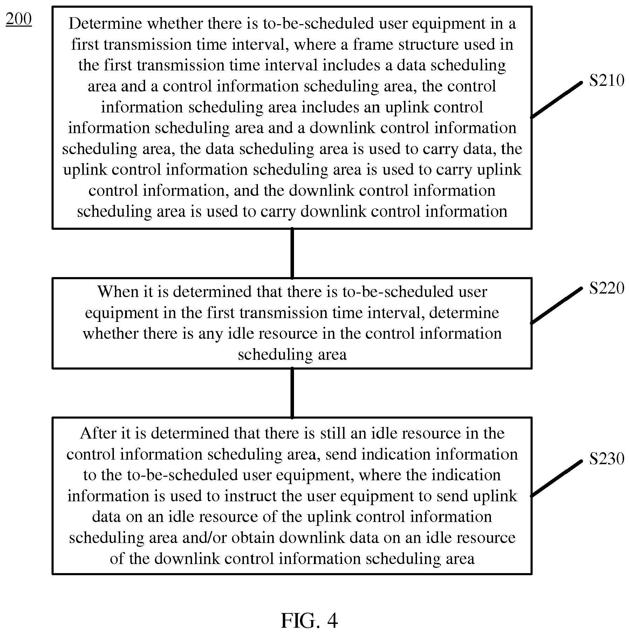

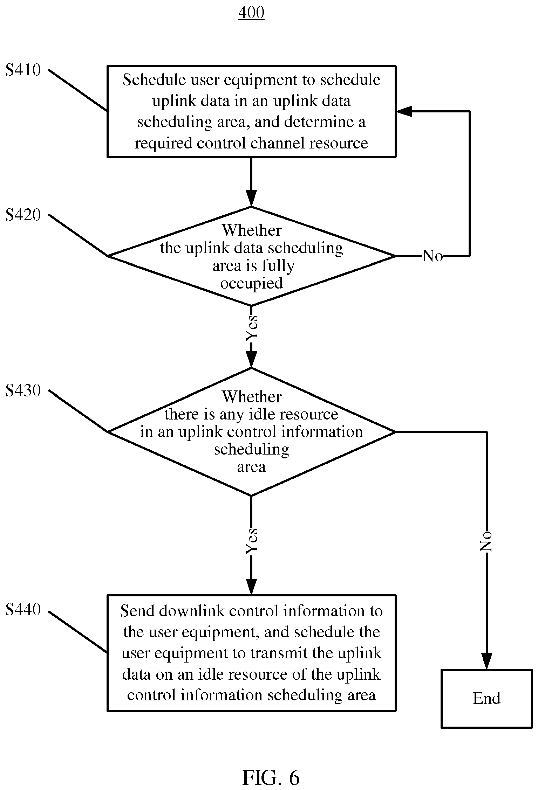

With reference to FIG. 1 to FIG. 3, the foregoing describes an application scenario of the aspects of the present disclosure and a frame structure in the OFDM-based TDD standard. The following describes, with reference to FIG. 4 and FIG. 6 and from a perspective of a network side, a data transmission method in the aspects of the present disclosure.

FIG. 4 shows a data transmission method 200 according to an aspect of the present disclosure. The method 200 may be, for example, executed by a network device. The network device is, for example, a base station. As shown in FIG. 4, the method 200 includes the following steps.

S210: Determine whether there is to-be-scheduled user equipment in a first transmission time interval, where a frame structure used in the first transmission time interval includes a data scheduling area and a control information scheduling area, the control information scheduling area includes an uplink control information scheduling area and a downlink control information scheduling area, the data scheduling area is used to carry data, the uplink control information scheduling area is used to carry uplink control information, and the downlink control information scheduling area is used to carry downlink control information.

S220: When it is determined that there is to-be-scheduled user equipment in the first transmission time interval, determine whether there is any spare resource in the control information scheduling area.

S230: After it is determined that there is still an spare resource in the control information scheduling area, send indication information to the to-be-scheduled user equipment, where the indication information is used to instruct the user equipment to send uplink data on an spare resource of the uplink control information scheduling area and/or obtain downlink data on an spare resource of the downlink control information scheduling area.

Specifically, in this aspect of the present disclosure, the network device is responsible for managing resource scheduling of uplink and downlink channels, namely, a system resource allocation process, so as to determine at what time which resources may be used by the user equipment to perform data transmission or data reception. When the network device determines that there is to-be-scheduled user equipment within a transmission time interval (Transmission Time Interval, TTI), the network device may determine whether there is any spare resource in the control information scheduling area. If there is still an spare resource, the control information scheduling area may be used for data transmission. If there is no spare resource, scheduling in the TTI may be terminated. For example, the network device determines that the to-be-scheduled user equipment needs to transmit uplink data; however, the TTI at this moment happens to be a downlink subframe, that is, the data scheduling area is a downlink data scheduling area PDSCH. When the network device determines that there is still an spare resource in the uplink control information scheduling area, the spare resource of the uplink control information scheduling area may be used to transmit the uplink data, without a need to wait for a next TTI for transmission. For another example, the network device determines that downlink data needs to be transmitted to the to-be-scheduled user equipment; however, the TTI at this moment happens to be an uplink subframe, that is, the data scheduling area is the uplink data scheduling area PUSCH. When the network device determines that there is still an spare resource in the downlink control information scheduling area, the spare resource of the downlink control information scheduling area may be used to transmit the downlink data, without a need to wait for a next TTI for transmission.

According to the data transmission method provided by this aspect of the present disclosure, control channel resources can be effectively utilized and data transmission efficiency can be improved.

It should be understood that in this aspect of the present disclosure, the indication information may be downlink control information DCI or may be downlink data. The downlink data has an indication function, and the downlink data may be used to indicate, to the user equipment, which location of the uplink control information scheduling area is for transmitting uplink data and/or which location of the downlink control information scheduling area is for obtaining downlink data. Preferably, the indication information is the downlink control information.

It should also be understood that in this application, the data scheduling area refers to a channel carrying data transmission, and the control information scheduling area refers to a channel carrying control information. For example, as shown in FIG. 3, the downlink data scheduling area may be a PDSCH, the downlink control information scheduling area may be a physical downlink control channel PDCCH (Physical Downlink Control Channel, PDCCH), the uplink data scheduling area may be a PUSCH, and the uplink control information scheduling area may be a physical uplink control channel PUCCH (Physical Uplink Control Channel, PUCCH).

Downlink/uplink service transmission in an LTE system is based on scheduling of the network device. A basic time unit of scheduling is a sub frame, and one sub frame includes a plurality time-domain symbols. A specific scheduling procedure is that the network device sends a control channel such as the PDCCH, and the control channel may carry PUSCH or PDSCH scheduling information. The scheduling information includes control information, such as resource allocation information and a modulation and coding scheme. The user equipment receives a downlink data channel or sends an uplink data channel by using the scheduling information obtained through blind detection. For example, the UE usually neither knows a quantity of control channel elements (Control Channel Element, CCE) currently occupied by the PDCCH and a downlink control information (Downlink Control Information, DCI) format of transmitted information, nor knows a location at which information required by the UE is located. However, the UE knows what information the UE currently wants, for example, the information wanted by the UE in an idle state is a paging message, and the UE wants uplink authorization and the like when there is uplink data waiting to be transmitted. For different wanted information, the UE uses a corresponding radio network temporary identifier (Radio Network Temporary Identifier, RNTI) to perform cyclic redundancy check with CCE information. If the cyclic redundancy check is successful, the UE knows that the information is required by the UE, and then may further know a corresponding DCI format and a modulation scheme, so as to parse out DCI content.

When the network device allocates a scheduling resource to user equipment, a data channel resource occupied by the user equipment may be calculated, so that a resource used for carrying data may be calculated. Similarly, the network device may also calculate a control channel resource occupied for scheduling the user equipment, so as to calculate a remaining resource of the control channel. If the network device calculates the resource available for carrying data as 0, and the control channel still has a remaining resource, the remaining resource of the control channel may be used for data transmission.

For example, if the frame structure used in the transmission time interval TTI for scheduling by the network device is a downlink subframe structure shown in FIG. 3, that is, the data scheduling area is the downlink data scheduling area PDSCH, when determining that there is downlink data to be transmitted, the network device may first determine whether resources are insufficient in the downlink data scheduling area PDSCH; if the resources are insufficient, the network device may further determine whether there is any spare resource in the downlink control information scheduling area; if there is an spare resource in the downlink control information scheduling area, the network device uses the spare resource of the downlink control information scheduling area to transmit the downlink data. Similarly, if the frame structure used in the transmission time interval TTI for scheduling by the network device is an uplink subframe structure shown in FIG. 3, that is, the data scheduling area is the uplink data scheduling area PUSCH, when determining that there is uplink data to be transmitted, the network device may first determine whether resources are insufficient in the uplink data scheduling area PUSCH; if the resources are insufficient, the network device may further determine whether there is any spare resource in the uplink control information scheduling area; if there is an spare resource in the uplink control information scheduling area, the network device uses the spare resource of the uplink control information scheduling area to transmit the uplink data.

When resources of the data scheduling area are insufficient, using a remaining resource of the control information scheduling area for data transmission avoids a waste of control channel resources and improves data transmission efficiency.

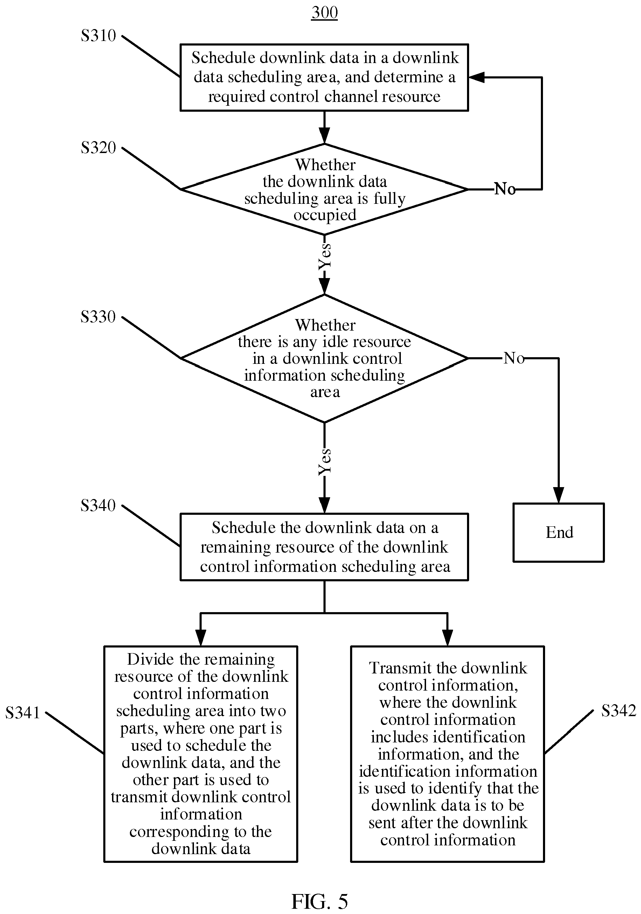

The following provides descriptions by using an example in which the downlink data is transmitted in a downlink subframe. FIG. 5 shows a data transmission method 300 according to an aspect of the present disclosure. As shown in FIG. 5, the method 300 includes the following steps.

S310: Schedule downlink data in a downlink data scheduling area, and determine a required control channel resource. A person skilled in the art understands that the downlink data scheduling area refers to a channel resource carrying downlink data, for example, the downlink data scheduling area may be a PDSCH shown in FIG. 3, and the control channel resource may be a PDCCH. Specifically, a base station determines a required PDCCH resource and a physical hybrid automatic repeat request indicator channel (Physical Hybrid Automatic Repeat Request Indicator Channel, PHICH) resource that is required for (Acknowledgment, ACK) feedback.

S320: Determine whether the downlink data scheduling area is fully occupied. If the downlink data scheduling area is not fully occupied, S310 is performed; if the downlink data scheduling area is fully occupied, S330 is performed. Specifically, a network device determines a system resource allocation process. To be specific, the network device may know how many resources in the downlink data scheduling area can be used to carry the downlink data. If the network device determines that there is an spare resource in the downlink data scheduling area, when there is still downlink data that needs to be transmitted, the network device continues to use the spare resource in the downlink data scheduling area to transmit the downlink data. If there is no spare resource, that is, the resources of the downlink data scheduling area is fully occupied, S330 is performed.

S330: Determine whether there is any spare resource in a downlink control information scheduling area. If it is determined that the downlink data scheduling area is fully occupied and there is still an spare resource in the downlink control information scheduling area, the downlink data continues to be sent to to-be-scheduled user equipment on the spare resource of the downlink control information scheduling area. If it is determined that the downlink data scheduling area is fully occupied and there is no spare resource in the downlink control information scheduling area, scheduling is terminated, and scheduling is not performed until a next TTI. It should be understood that the to-be-scheduled user equipment may be user equipment whose downlink data has been scheduled, or may be new user equipment whose downlink data has not been scheduled in a cell.

S340: Schedule the downlink data on an spare resource of the downlink control information scheduling area. Specifically, transmission in the downlink control information scheduling area is organized in a form of a CCE. One CCE includes nine resource element groups (Resource Element Group, REG), and each REG includes four resource elements (Resource Element, RE). Each user equipment may occupy one or more CCE resources.

Optionally, the base station may schedule the downlink data on the spare resource of the downlink control information scheduling area in two manners. S341: The base station may allocate two sets of resources to the to-be-scheduled user equipment; in other words, a remaining resource of a control information scheduling area may be divided into two parts, where one part is used to transmit downlink data for the to-be-scheduled user equipment, and the other part is used to transmit downlink control information corresponding to the downlink data. The downlink control information includes location indication information. Scheduling is successful only when the two sets of resources are successfully allocated at the same time. The user equipment obtains corresponding downlink control information of the user equipment through blind detection, and performs parsing to obtain a location of the downlink data, so that the user equipment can receive the downlink data at the determined location. S342: The base station may allocate one set of resources to the to-be-scheduled user equipment, and may add identification information to downlink control information to be sent by the base station, where the identification information is used to identify that the downlink data is to be sent after the downlink control information. For example, a field may be added to the downlink control information, and the added field is: content flag: 1bit, where 0 indicates that the downlink control information is merely conventional control information, and 1 indicates that the downlink data follows the downlink control information. It should be understood that scheduling the downlink data by using the remaining resource of the downlink control information scheduling area mentioned in S341 and S342 is merely used as an example for description in this aspect of the present disclosure, and this is not limited in the present disclosure.

A person skilled in the art understands that when receiving the downlink data, the UE needs to obtain, through blind detection, the DCI corresponding to the UE. When performing blind detection in PDCCH search space, the UE merely needs to perform a decoding attempt on DCI that possibly occurs, without a need to perform matching on all DCI formats. A total quantity of PDCCH blind detections performed by the UE does not exceed 44. When the to-be-transmitted downlink data is a small data packet, a manner in the foregoing step S342 is preferably used. The to-be-transmitted downlink data may be disguised as the downlink control information, where the identification information is added to the downlink control information. After receiving the downlink control information, the UE may directly obtain the downlink data through blind detection. However, if to-be-transmitted downlink data is a large data packet, there are a lot of possible results of the blind detection performed by the UE, and therefore, a manner in the foregoing step S341 may be usually used for the large data packet.

It should be understood that the downlink data scheduling area and the downlink control information scheduling area in this application are merely described by using the PDSCH and the PDCCH, respectively, as examples. The present disclosure is not limited thereto.

The following describes in detail a downlink scheduling process in this aspect of the present disclosure. It is assumed that there is only one UE in a cell, and a volume of downlink data required by the UE is relatively large. Firstly, an eNB performs downlink channel quality measurement. The eNB sends a cell feature reference signal to the UE, and the UE estimates and reports a channel quality indication (channel quality indication, CQI) to the eNB. The UE reports the CQI in two manners: periodically and aperiodically. The two manners may exist simultaneously. If the two manners are simultaneously used for reporting, periodic reporting is replaced by aperiodic reporting, and the CQI is merely reported aperiodically. The cell feature reference signal is full-band, is for the entire cell, and is sent at a fixed subframe location. The RS signal is referenced whenever the UE needs to report the CQI. The CQI may not only be used to inform the eNB of channel quality, but also include a recommended coding and modulation scheme. Secondly, the eNB allocates a downlink resource. The eNB adaptively allocates a downlink resource based on downlink channel quality, and sends the DCI to the UE by using the PDCCH. Content of the DCI includes resource allocation information, a modulation and coding scheme, and the like. Thirdly, when the eNB determines that the PDSCH channel has no resource and there is still downlink data that needs to be transmitted, the eNB further determines whether the PDCCH channel has an spare resource. Fourthly, when determining that the PDCCH channel still has an spare resource, the eNB divides the PDCCH into two parts, one part is used to transmit remaining downlink data, and the other part is used to transmit downlink control information corresponding to the downlink data. Finally, the UE obtains the downlink control information through blind detection, and receives, according to the downlink control information, the downlink data on the channel resource allocated by eNB.

The foregoing describes in detail downlink data transmission in a downlink subframe, and the following uses uplink data transmission in an uplink subframe as an example for description. FIG. 6 shows a data transmission method 400 according to an aspect of the present disclosure. As shown in FIG. 6, the method 400 includes the following steps.

S410: Schedule user equipment to schedule uplink data in an uplink data scheduling area, and determine a required control channel resource. A person skilled in the art understands that the uplink data scheduling area refers to a channel resource carrying uplink data. For example, the uplink data scheduling area may be a PUSCH shown in FIG. 3, and the control channel resource may be a PUCCH. Specifically, a base station schedules user equipment in a cell to perform periodic and/or aperiodic SRS feedback, periodic and/or aperiodic CSI feedback, and periodic scheduling request (Scheduling Request, SR) feedback, and the base station determines the required control channel resource, including a PUCCH resource and an SRS resource.

S420: Determine whether the uplink data scheduling area is fully occupied. If the uplink data scheduling area is not fully occupied, S410 is performed; if the uplink data scheduling area is fully occupied, S430 is performed. Specifically, a network device determines a system resource allocation process. To be specific, the network device may know how many resources in the uplink data scheduling area can be used to carry uplink data. If the network device determines that there is an spare resource in the uplink data scheduling area, when there is still uplink data that needs to be transmitted, the network device continues to use the spare resource in the uplink data scheduling area to transmit the uplink data. If there is no spare resource, that is, the resources are fully occupied, S430 is performed.

S430: Determine whether there is any spare resource in an uplink control information scheduling area. If it is determined that the uplink data scheduling area is fully occupied and there is still an spare resource in the uplink control information scheduling area, the user equipment may be scheduled to continue to send the uplink data on the spare resource in the uplink control information scheduling area. If it is determined that the uplink data scheduling area is fully occupied and there is no spare resource in the uplink control information scheduling area, scheduling is terminated, and scheduling is not performed until a next TTI. It should be understood that the to-be-scheduled user equipment may be user equipment that has been scheduled, or may be new user equipment that has not been scheduled in the cell.

S440: Send downlink control information to the user equipment, and schedule the user equipment to transmit the uplink data on an spare resource of the uplink control information scheduling area. The downlink control information is used to indicate which uplink control channel resource is used by the user equipment to transmit the uplink data. Specifically, allocation may be performed based on a granularity of the PUCCH resource, so that the spare resource of the uplink control channel scheduling area can be optimally utilized. A person skilled in the art understands that the base station schedules the user equipment to send the uplink data; in other words, before a user sends the uplink data, the base station needs to inform the user equipment of a resource allocation result of the base station, that is, at what time on which carrier by using which modulation and coding scheme the UE may transmit data.

It should be understood that the uplink data scheduling area and the uplink control information scheduling area in this application are merely described by using the PUSCH and the PUCCH, respectively, as examples. The present disclosure is not limited thereto.

The following describes in detail an uplink scheduling process in this aspect of the present disclosure. Firstly, the UE requests an uplink resource from the eNB. According to an upper-layer configuration, the UE transmits an SR by using an uplink control message of the PUCCH based on a specific period and a specific subframe location. To be specific, when the UE needs to send data, the UE sets a corresponding SR to 1, and when there is no resource request, sets the SR to null, instead of using a packet form. The SR is merely responsible for informing the eNB whether there is a resource request, and the eNB is informed of a quantity of specifically required resources through subsequent signaling exchange. Secondly, the eNB performs uplink channel quality measurement. The eNB needs to know the uplink channel quality before allocating the uplink resource to the UE. The eNB allocates a resource to the UE only when the uplink channel quality of the UE is relatively good and there is data that needs to be transmitted. Thirdly, the eNB allocates the resource and informs the UE of an allocation result by using the PDCCH. After allocating the resource, the eNB further needs to inform the UE of the allocation result, that is, at what time on which carrier by using which modulation and coding scheme the UE may transmit data. Fourthly, the UE receives a resource allocation result notification. The UE first receives the resource allocation notification delivered by the eNB and monitors the PDCCH, so as to find a possible uplink transmission resource that is allocated. Fifthly, when the eNB determines that the PUSCH channel has no resource and there is still uplink data that needs to be transmitted, the eNB further determines whether the PUCCH channel has an spare resource. Sixthly, when determining that the PUCCH channel still has an spare resource, the eNB sends the downlink control information to the UE, and schedules the user equipment to transmit the uplink data by using the spare resources of the PUCCH channel. Finally, the UE transmits the uplink data according to the received downlink control information and based on the resources allocated by the eNB.

According to the data transmission method provided by this aspect of the present disclosure, when a data scheduling area is fully occupied and there is still data that needs to be transmitted or there is user equipment that needs to be scheduled, a remaining resource of a control information scheduling area is used for data transmission. This avoids a waste of control channel resources and improves data transmission efficiency.

Optionally, a downlink control channel resource occupies three orthogonal frequency division multiplexing OFDM symbols of a frame structure, and/or an uplink control channel resource occupies three orthogonal frequency division multiplexing OFDM symbols of the frame structure. This can further ensure that control channel resources are sufficient and do not become a bottleneck of control information transmission.

Optionally, at least one of the following signaling is carried in the downlink control information scheduling area: a system message broadcast, a random access response (Random Access Response, RAR), a paging message paging, and channel state information-reference signal (Channel State Information-Reference Signal, CSI-RS).

Specifically, in the prior art, upper-layer signaling, such as a system message broadcast, a random access response, and a paging message, is carried in a PDSCH channel, and at least one of the signaling may be sent in a downlink control information scheduling area, or a CSI-RS used for beam tracking and radio resource management (Radio Resource Management, RRM) measurement may be sent in the downlink control information scheduling area, so that scheduling of the upper-layer signaling and the CSI-RS is no longer limited by a ratio of an uplink subframe to a downlink subframe in an original LTE TDD standard. This can implement timely scheduling and transmission and reduce an access delay of the user equipment. The aforementioned signaling is merely an example, and may alternatively be an ultra low delay and ultra reliable machine type communication (Ultra low delay and ultra reliable Machine Type Communication, UMTC) data packet or the like. This is not limited in the present disclosure.

It should be understood that carrying important signaling in the downlink control information scheduling area may be sending, before the base station sends the downlink data, the important signaling by using a resource reserved in the downlink control information scheduling area, or may be sending the important signaling by using an spare resource of the downlink control information scheduling area after the downlink data is sent.

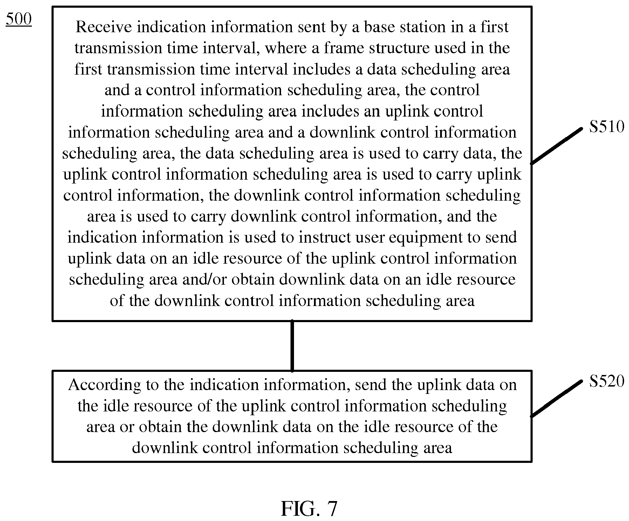

The foregoing describes in detail, with reference to FIG. 3 to FIG. 6 and from a perspective of the network device, the data transmission method in the aspects of the present disclosure. The following describes, with reference to FIG. 7 and from a perspective of a terminal device, the data transmission method according to the aspects of the present disclosure.

As shown in FIG. 7, a data transmission method 500 according to an aspect of the present disclosure may be performed, for example, by a terminal device in a communications system, and the terminal device is, for example, user equipment. As shown in FIG. 7, the method 500 includes the following steps.

S510: Receive indication information sent by a base station in a first transmission time interval, where a frame structure used in the first transmission time interval includes a data scheduling area and a control information scheduling area. The control information scheduling area includes an uplink control information scheduling area and a downlink control information scheduling area, the data scheduling area is used to carry data, the uplink control information scheduling area is used to carry uplink control information, the downlink control information scheduling area is used to carry downlink control information, and the indication information is used to instruct user equipment to send uplink data on an spare resource of the uplink control information scheduling area and/or obtain downlink data on an spare resource of the downlink control information scheduling area.

S520: According to the indication information, send the uplink data on the spare resource of the uplink control information scheduling area or obtain the downlink data on the spare resource of the downlink control information scheduling area.

According to the data transmission method provided by this aspect of the present disclosure, control channel resources can be effectively utilized and data transmission efficiency can be improved.

Optionally, the indication information includes location indication information, and the location indication information is used to instruct the user equipment to send the uplink data at a first location of the spare resource of the uplink control information scheduling area and/or receive the downlink data at a second location of the spare resource of the downlink control information scheduling area; and the sending the uplink data on the spare resource of the uplink control information scheduling area and/or obtaining the downlink data on the spare resource of the downlink control information scheduling area includes: according to the indication information, sending the uplink data at the first location and/or receiving the downlink data at the second location.

Optionally, the indication information includes identification information, and the identification information is used to identify that the downlink data is to be transmitted after the indication information, and the sending the uplink data on the spare resource of the uplink control information scheduling area and/or obtaining the downlink data on the spare resource of the downlink control information scheduling area includes: obtaining the downlink data after the indication information according to the identification information.

The identification information is added to the indication information, so that the user equipment can obtain the downlink data through one blind detection.

It should be understood that interaction between the network device and a terminal device, related features and functions, and the like that are described from a perspective of a network device side are corresponding to those described from a perspective of a terminal device side. For brevity, details are not described herein again.

It should also be understood that sequence numbers of the foregoing processes do not mean execution sequences in various aspects of the present disclosure. The execution sequences of the processes should be determined based on functions and internal logic of the processes, and should not be construed as any limitation on the implementation processes of the aspects of the present disclosure.

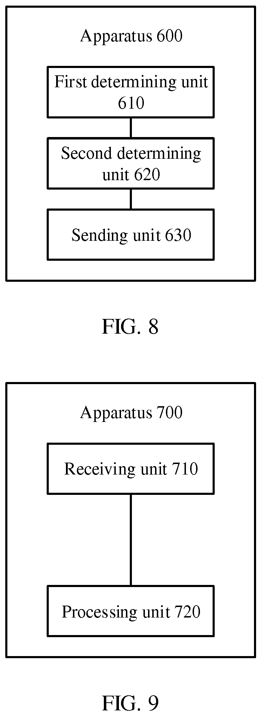

The foregoing describes in detail the data transmission method according to the aspects of the present disclosure with reference to FIG. 3 to FIG. 7. The following describes a data transmission apparatus according to the aspects of the present disclosure with reference to FIG. 8 to FIG. 11. Technical features described in the method aspects may be applicable to the following apparatus aspects.

FIG. 8 shows a data transmission apparatus 600 according to an aspect of the present disclosure. As shown in FIG. 8, the apparatus 600 includes:
a first determining unit 610, configured to determine whether there is to-be-scheduled user equipment in a first transmission time interval, where a frame structure used in the first transmission time interval includes a data scheduling area and a control information scheduling area, the control information scheduling area includes an uplink control information scheduling area and a downlink control information scheduling area, the data scheduling area is used to carry data, the uplink control information scheduling area is used to carry uplink control information, and the downlink control information scheduling area is used to carry downlink control information;
a second determining unit 620, configured to, when the first determining unit 610 determines that there is to-be-scheduled user equipment in the first transmission time interval, determine whether there is any spare resource in the control information scheduling area; and
a sending unit 630, configured to, after the second determining unit 620 determines that there is still an spare resource in the control information scheduling area, send indication information to the to-be-scheduled user equipment, where the indication information is used to instruct the user equipment to send uplink data on an spare resource of the uplink control information scheduling area and/or obtain downlink data on an spare resource of the downlink control information scheduling area.

Specifically, in this aspect of the present disclosure, a network device is responsible for managing resource scheduling of uplink and downlink channels, namely, a system resource allocation process, so as to determine at what time which resources may be used by the user equipment to perform data transmission or data reception. When the network device determines that there is to-be-scheduled user equipment within a transmission time interval (Transmission Time Interval, TTI), the network device may determine whether there is any spare resource in the control information scheduling area. If there is still an spare resource, the control information scheduling area may be used for data transmission. If there is no spare resource, scheduling in the TTI may be terminated. For example, the network device determines that the to-be-scheduled user equipment needs to transmit uplink data; however, the TTI at this moment happens to be a downlink subframe, that is, the data scheduling area is a downlink data scheduling area PDSCH. When the network device determines that there is still an spare resource in the uplink control information scheduling area, the spare resource of the uplink control information scheduling area may be used to transmit the uplink data, without a need to wait for a next TTI for transmission.

According to the data transmission apparatus provided by this aspect of the present disclosure, control channel resources can be effectively utilized and data transmission efficiency can be improved.

In this aspect of the present disclosure, optionally, the data scheduling area is a downlink data scheduling area, and the second determining unit is specifically configured to determine whether resources are insufficient in the downlink data scheduling area, and when it is determined that the resources are insufficient in the downlink data scheduling area, determine whether there is any spare resource in the downlink control information scheduling area.

In this aspect of the present disclosure, optionally, the data scheduling area is an uplink data scheduling area, and the second determining unit is specifically configured to determine whether resources are insufficient in the uplink data scheduling area, and when it is determined that the resources are insufficient in the uplink data scheduling area, determine whether there is any spare resource in the uplink control information scheduling area.

When resources of the data scheduling area are insufficient, using a remaining resource of the control information scheduling area for data transmission avoids a waste of control channel resources and improves data transmission efficiency.

In this aspect of the present disclosure, optionally, the indication information includes identification information, and the identification information is used to identify that the downlink data is to be transmitted after the indication information.

In this aspect of the present disclosure, optionally, the indication information includes location indication information, and the location indication information is used to instruct the user equipment to send the uplink data at a first location of the spare resource of the uplink control information scheduling area and/or receive the downlink data at a second location of the spare resource of the downlink control information scheduling area.

In this aspect of the present disclosure, optionally, at least one of the following signaling is carried in the downlink control information scheduling area: a system message broadcast, a random access response, a paging message, and channel state information-reference signal.

In this aspect of the present disclosure, optionally, the apparatus 600 is a network device.

It should be understood that the apparatus 600 according to this aspect of the present disclosure may be corresponding to the network device in the method aspects of the present disclosure, and the foregoing and other operations and/or functions of each unit in the apparatus 600 are intended to implement corresponding processes of the methods in FIG. 3 to FIG. 6. For brevity, details are not described herein again.

The foregoing describes in detail, with reference to FIG. 8 and from a perspective of a network device side, the data transmission apparatus according to this aspect of the present disclosure. The following describes, with reference to FIG. 9 and from a perspective of a terminal device side, a data transmission apparatus according to an aspects of the present disclosure. FIG. 9 shows a data transmission apparatus 700 according to an aspect of the present disclosure. As shown in FIG. 9, the apparatus 700 includes:
a receiving unit 710, configured to receive indication information sent by a base station in a first transmission time interval, where a frame structure used in the first transmission time interval includes a data scheduling area and a control information scheduling area, the control information scheduling area includes an uplink control information scheduling area and a downlink control information scheduling area, the data scheduling area is used to carry data, the uplink control information scheduling area is used to carry uplink control information, the downlink control information scheduling area is used to carry downlink control information, and the indication information is used to instruct user equipment to send uplink data on an spare resource of the uplink control information scheduling area or obtain downlink data on an spare resource of the downlink control information scheduling area; and
a processing unit 720, configured to, according to the indication information received by the receiving unit 710, send the uplink data on the spare resource of the uplink control information scheduling area and/or obtain the downlink data on the spare resource of the downlink control information scheduling area.

In this aspect of the present disclosure, optionally, the indication information includes identification information, and the identification information is used to identify that the downlink data is to be transmitted after the indication information, and the processing unit 720 is specifically configured to obtain the downlink data after the indication information according to the identification information.

In this aspect of the present disclosure, optionally, the indication information includes location indication information, and the location indication information is used to instruct the user equipment to send the uplink data at a first location of the spare resource of the uplink control information scheduling area and/or receive the downlink data at a second location of the spare resource of the downlink control information scheduling area. The processing unit 720 is specifically configured to, according to the indication information, send the uplink data at the first location and/or receive the downlink data at the second location.

According to the data transmission apparatus provided by this aspect of the present disclosure, control channel resources can be effectively utilized and data transmission efficiency can be improved.

In this aspect of the present disclosure, optionally, the apparatus 700 is user equipment.

It should be understood that the apparatus 700 for transmitting data and control information according to this aspect of the present disclosure may be corresponding to the terminal device in the method aspects of the present disclosure, and the foregoing and other operations and/or functions of each unit in the apparatus 700 are intended to implement a corresponding process of the method in FIG. 7. For brevity, details are not described herein again.

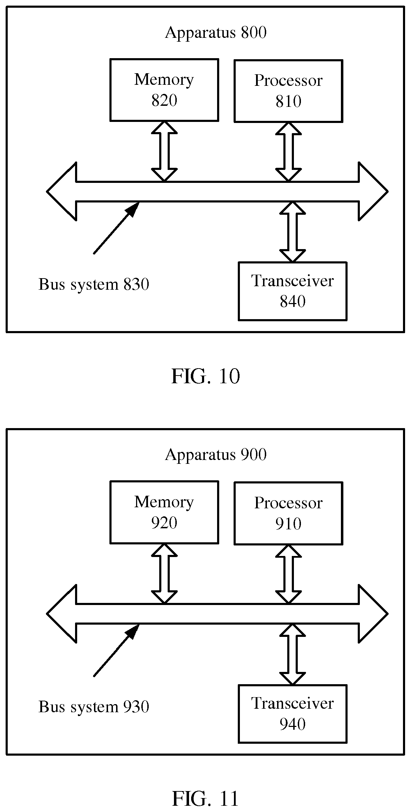

As shown in FIG. 10, an aspect of the present disclosure further provides a data transmission apparatus 800. The apparatus 800 includes a processor 810, a memory 820, a bus system 830, and a transceiver 840. The processor 810, the memory 820, and the transceiver 840 are connected by using the bus system 830. The memory 820 is configured to store an instruction, and the processor 810 is configured to execute the instruction stored in the memory 820, to control the transceiver 840 to send a signal. The processor 810 is configured to: determine whether there is to-be-scheduled user equipment in a first transmission time interval, where a frame structure used in the first transmission time interval includes a data scheduling area and a control information scheduling area, the control information scheduling area includes an uplink control information scheduling area and a downlink control information scheduling area, the data scheduling area is used to carry data, the uplink control information scheduling area is used to carry uplink control information, and the downlink control information scheduling area is used to carry downlink control information; when it is determined that there is to-be-scheduled user equipment in the first transmission time interval, determine whether there is any spare resource in the control information scheduling area; and after it is determined that there is still an spare resource in the control information scheduling area, send indication information to the to-be-scheduled user equipment, where the indication information is used to instruct the user equipment to send uplink data on an spare resource of the uplink control information scheduling area and/or obtain downlink data on an spare resource of the downlink control information scheduling area.

According to the data transmission apparatus provided by this aspect of the present disclosure, control channel resources can be effectively utilized and data transmission efficiency can be improved.

It should be understood that, in this aspect of the present disclosure, the processor 810 may be a central processing unit (Central Processing Unit, "CPU" for short), and the processor 810 may alternatively be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

The memory 820 may include a read-only memory and a random access memory, and provide an instruction and data for the processor 810. A part of the memory 820 may further include a non-volatile random access memory. For example, the memory 820 may further store device type information.

The bus system 830 may include not only a data bus but also a power bus, a control bus, a status signal bus, and the like. However, for clarity, various types of buses in the figure are all marked as the bus system 830.

In an implementation process, the steps of the foregoing method may be implemented by using an integrated logic circuit of hardware in the processor 810 or by using an instruction in a form of software. The steps of the methods disclosed with reference to the aspects of the present disclosure may be directly implemented by a hardware processor, or may be implemented by a combination of hardware in a processor and a software module. The software module may be located in a storage medium that is mature in the art, such as a random access memory, a flash memory, a read-only memory, a programmable read-only memory, an electrically erasable programmable memory, or a register. The storage medium is located in the memory 820, and the processor 810 reads information in the memory 820 and implements, in combination with hardware of the processor, the steps of the foregoing methods. To avoid repetition, details are not described herein again.

It should be understood that the data transmission apparatus 800 according to this aspect of the present disclosure may be corresponding to a network device and the apparatus 600 in the aspects of the present disclosure, and may also be corresponding to a corresponding execution body of the methods according to the aspects of the present disclosure. The foregoing and other operations and/or functions of each unit in the apparatus 800 are intended to implement corresponding processes of the methods in FIG. 3 to FIG. 6. For brevity, details are not described herein again.

As shown in FIG. 11, an aspect of the present disclosure further provides a data transmission apparatus 900. The apparatus 900 includes a processor 910, a memory 920, a bus system 930, and a transceiver 940. The processor 910, the memory 920, and the transceiver 940 are connected by using the bus system 930. The memory 920 is configured to store an instruction, and the processor 910 is configured to execute the instruction stored in the memory 920, to control the transceiver 940 to receive a signal. The processor 910 is configured to: receive, in a first transmission time interval, indication information sent by a base station, where a frame structure used in the first transmission time interval includes a data scheduling area and a control information scheduling area, the control information scheduling area includes an uplink control information scheduling area and a downlink control information scheduling area, the data scheduling area is used to carry data, the uplink control information scheduling area is used to carry uplink control information, the downlink control information scheduling area is used to carry downlink control information, and the indication information is used to instruct user equipment to send uplink data on an spare resource of the uplink control information scheduling area and/or obtain downlink data on an spare resource of the downlink control information scheduling area; and according to the indication information, send the uplink data on the spare resource of the uplink control information scheduling area or obtain the downlink data on the spare resource of the downlink control information scheduling area.

According to the data transmission apparatus provided by this aspect of the present disclosure, control channel resources can be effectively utilized and data transmission efficiency can be improved.

It should be understood that, in this aspect of the present disclosure, the processor 910 may be a central processing unit (Central Processing Unit, "CPU" for short), and the processor 910 may alternatively be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

The memory 920 may include a read-only memory and a random access memory, and provide an instruction and data for the processor 910. A part of the memory 920 may further include a non-volatile random access memory. For example, the memory 920 may further store device type information.

The bus system 930 may include not only a data bus but also a power bus, a control bus, a status signal bus, and the like. However, for clarity, various types of buses in the figure are all marked as the bus system 930.

In an implementation process, the steps of the foregoing method may be implemented by using an integrated logic circuit of hardware in the processor 910 or by using an instruction in a form of software. The steps of the methods disclosed with reference to the aspects of the present disclosure may be directly implemented by a hardware processor, or may be implemented by a combination of hardware in a processor and a software module. The software module may be located in a storage medium that is mature in the art, such as a random access memory, a flash memory, a read-only memory, a programmable read-only memory, an electrically erasable programmable memory, or a register. The storage medium is located in the memory 920, and the processor 910 reads information in the memory 920 and implements, in combination with hardware of the processor, the steps of the foregoing methods. To avoid repetition, details are not described herein again.

It should be understood that the data transmission apparatus 900 according to this aspect of the present disclosure may be corresponding to a terminal device and the apparatus 700 in the aspects of the present disclosure, and may also be corresponding to a corresponding execution body of the methods according to the aspects of the present disclosure. The foregoing and other operations and/or functions of each module in the apparatus 900 are intended to implement a corresponding process of the method in FIG. 7. For brevity, details are not described herein again.

In addition, the terms "system" and "network" are usually used interchangeably in this specification. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the former and latter associated objects.

It should be understood that in the aspects of the present disclosure, "B corresponding to A" indicates that B is associated with A, and B may be determined based on A. However, it should be further understood that determining B based on A does not mean that B is determined based on A only, and B may also be determined based on A and/or other information.

A person of ordinary skill in the art may be aware that, in combination with the examples described in the aspects disclosed in this specification, units and algorithm steps may be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for ease and brevity of description, for a detailed working process of the foregoing system, apparatus, and unit, reference may be made to a corresponding process in the foregoing method aspects, and details are not described herein again.

In the several aspects provided in this application, it should be understood that the disclosed system, apparatus, and method may be implemented in other manners. For example, the described apparatus aspect is merely an example. For example, the unit division is merely logical function division and may be other division in actual implementation. For example, a plurality of units or components may be combined or may be integrated into another system, or some features may be ignored or not performed. In addition, the displayed or discussed mutual couplings, direct couplings, or communication connections may be implemented through some interfaces, or indirect couplings or communication connections between the apparatuses or units, or may be electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected depending on actual requirements, to achieve the objectives of the solutions of the aspects of the present disclosure.

In addition, functional units in the aspects of the present disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the aspects of the present disclosure. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present disclosure, but are not intended to limit the protection scope of the present disclosure. Therefore, the protection scope of the present disclosure shall be subject to the protection scope of the claims.

## Claims

1. A time-division duplexing based data transmission method, comprising:
determining (S210) whether there is to-be-scheduled user equipment in a first transmission time interval, wherein a frame structure used in the first transmission time interval comprises a data scheduling area and a control information scheduling area, the control information scheduling area comprises an uplink control information scheduling area and a downlink control information scheduling area, the data scheduling area is used to carry data, the uplink control information scheduling area is used to carry uplink control information, and the downlink control information scheduling area is used to carry downlink control information;
when it is determined that there is to-be-scheduled user equipment in the first transmission time interval, determining (S220) whether there is any spare resource in the control information scheduling area; and
after it is determined that there is still an spare resource in the control information scheduling area, sending (S230) indication information to the to-be-scheduled user equipment, wherein the indication information is used to instruct the user equipment to send uplink data on an spare resource of the uplink control information scheduling area and/or obtain downlink data on an spare resource of the downlink control information scheduling area;
wherein, the data scheduling area refers to a channel carrying data transmission, and the control information scheduling area refers to a channel carrying control information, wherein the downlink data scheduling area is a physical downlink shared channel, PDSCH, the uplink data scheduling area is a physical uplink shared channel, PUSCH, and the control information scheduling area is one of a physical downlink control channel, PDCCH, and a physical uplink control channel, PUCCH,
wherein the spare resource in the control information scheduling area is a remaining resource in the control information scheduling area after scheduling information corresponding to PDSCH and/or PUSCH in the first transmission time interval has occupied the control information scheduling area.

2. The method according to claim 1, wherein the data scheduling area is an uplink data scheduling area, and the determining whether there is any spare resource in the control information scheduling area comprises:
determining whether resources are insufficient in the uplink data scheduling area; and
when it is determined that the resources are insufficient in the uplink data scheduling area, determining whether there is any spare resource in the uplink control information scheduling area.

3. The method according to claim 1, wherein the data scheduling area is a downlink data scheduling area, and the determining whether there is any spare resource in the control information scheduling area comprises:
determining whether resources are insufficient in the downlink data scheduling area; and
when it is determined that the resources are insufficient in the downlink data scheduling area, determining whether there is any spare resource in the downlink control information scheduling area.

4. The method according to any one of claims 1 to 3, wherein the indication information comprises location indication information, and the location indication information is used to instruct the user equipment to send the uplink data at a first location of the spare resource of the uplink control information scheduling area and/or receive the downlink data at a second location of the spare resource of the downlink control information scheduling area.

5. The method according to any one of claims 1 to 3, wherein the indication information comprises identification information, and the identification information is used to identify that the downlink data is to be transmitted after the indication information.

6. A time-division duplexing based data transmission method, comprising:
receiving (S510) indication information sent by a base station in a first transmission time interval, wherein a frame structure used in the first transmission time interval comprises a data scheduling area, an uplink control information scheduling area, and a downlink control information scheduling area, the data scheduling area is used to carry data, the uplink control information scheduling area is used to carry uplink control information, the downlink control information scheduling area is used to carry downlink control information, and the indication information is used to instruct user equipment to send to-be-transmitted uplink data on an spare resource of the uplink control information scheduling area and/or obtain to-be-transmitted downlink data on an spare resource of the downlink control information scheduling area; and
according to the indication information, sending (S520) the uplink data on the spare resource of the uplink control information scheduling area and/or obtaining the downlink data on the spare resource of the downlink control information scheduling area;
wherein, the data scheduling area refers to a channel carrying data transmission, and the control information scheduling area refers to a channel carrying control information, wherein the downlink data scheduling area is a physical downlink shared channel, PDSCH, the uplink data scheduling area is a physical uplink shared channel, PUSCH, and the control information scheduling area is one of a physical downlink control channel, PDCCH, and a physical uplink control channel, PUCCH,
wherein the spare resource in the control information scheduling area is a remaining resource in the control information scheduling area after scheduling information corresponding to PDSCH and/or PUSCH in the first transmission time interval has occupied the control information scheduling area.

7. The method according to claim 6, wherein the indication information comprises identification information, and the identification information is used to identify that the downlink data is to be transmitted after the indication information, and the sending the uplink data on the spare resource of the uplink control information scheduling area and/or obtaining the downlink data from the spare resource of the downlink control information scheduling area comprises:
obtaining the downlink data after the indication information according to the identification information.

8. The method according to claim 6, wherein the indication information comprises location indication information, and the location indication information is used to instruct the user equipment to send the uplink data at a first location of the spare resource of the uplink control information scheduling area and/or receive the downlink data at a second location of the spare resource of the downlink control information scheduling area; and the sending the uplink data on the spare resource of the uplink control information scheduling area and/or obtaining the downlink data on the spare resource of the downlink control information scheduling area comprises:
according to the location indication information, sending the uplink data at the first location and/or receiving the downlink data at the second location.

9. A time-division duplexing based data transmission apparatus, comprising:
a first determining unit (610), configured to determine whether there is to-be-scheduled user equipment in a first transmission time interval, wherein a frame structure used in the first transmission time interval comprises a data scheduling area and a control information scheduling area, the control information scheduling area comprises an uplink control information scheduling area and a downlink control information scheduling area, the data scheduling area is used to carry data, the uplink control information scheduling area is used to carry uplink control information, and the downlink control information scheduling area is used to carry downlink control information;
a second determining unit (620), configured to, when the first determining unit determines that there is to-be-scheduled user equipment in the first transmission time interval, determine whether there is any spare resource in the control information scheduling area; and
a sending unit (630), configured to, after the second determining unit determines that there is still an spare resource in the control information scheduling area, send indication information to the to-be-scheduled user equipment, wherein the indication information is used to instruct the user equipment to send uplink data on an spare resource of the uplink control information scheduling area and/or obtain downlink data on an spare resource of the downlink control information scheduling area;
wherein, the data scheduling area refers to a channel carrying data transmission, and the control information scheduling area refers to a channel carrying control information, wherein the downlink data scheduling area is a physical downlink shared channel, PDSCH, the uplink data scheduling area is a physical uplink shared channel, PUSCH, and the control information scheduling area is one of a physical downlink control channel, PDCCH, and a physical uplink control channel, PUCCH,
wherein the spare resource in the control information scheduling area is a remaining resource in the control information scheduling area after scheduling information corresponding to PDSCH and/or PUSCH in the first transmission time interval has occupied the control information scheduling area.

10. The apparatus according to claim 9, wherein the data scheduling area is an uplink data scheduling area, and the second determining unit is specifically configured to:
determine whether resources are insufficient in the uplink data scheduling area; and
when it is determined that the resources are insufficient in the uplink data scheduling area, determine whether there is any spare resource in the uplink control information scheduling area.

11. The apparatus according to claim 9, wherein the data scheduling area is a downlink data scheduling area, and the second determining unit is specifically configured to:
determine whether resources are insufficient in the downlink data scheduling area; and
when it is determined that the resources are insufficient in the downlink data scheduling area, determine whether there is any spare resource in the downlink control information scheduling area.

12. The apparatus according to any one of claims 9 to 11, wherein the indication information comprises location indication information, and the location indication information is used to instruct the user equipment to send the uplink data at a first location of the spare resource of the uplink control information scheduling area and/or receive the downlink data at a second location of the spare resource of the downlink control information scheduling area.

13. The apparatus according to any one of claims 9 to 11, wherein the indication information comprises identification information, and the identification information is used to identify that the downlink data is to be transmitted after the indication information.

14. A time-division duplexing based data transmission apparatus, comprising:
a receiving unit (710), configured to receive indication information sent by a base station in a first transmission time interval, wherein a frame structure used in the first transmission time interval comprises a data scheduling area, an uplink control information scheduling area, and a downlink control information scheduling area, the data scheduling area is used to carry data, the uplink control information scheduling area is used to carry uplink control information, the downlink control information scheduling area is used to carry downlink control information, and the indication information is used to instruct user equipment to send to-be-transmitted uplink data on an spare resource of the uplink control information scheduling area and/or obtain to-be-transmitted downlink data on an spare resource of the downlink control information scheduling area; and
an obtaining unit (720), configured to, according to the indication information, send the uplink data on the spare resource of the uplink control information scheduling area and/or obtain the downlink data on the spare resource of the downlink control information scheduling area;
wherein, the data scheduling area refers to a channel carrying data transmission, and the control information scheduling area refers to a channel carrying control information, wherein the downlink data scheduling area is a physical downlink shared channel, PDSCH, the uplink data scheduling area is a physical uplink shared channel, PUSCH, and the control information scheduling area is one of a physical downlink control channel, PDCCH, and a physical uplink control channel, PUCCH,
wherein the spare resource in the control information scheduling area is a remaining resource in the control information scheduling area after scheduling information corresponding to PDSCH and/or PUSCH in the first transmission time interval has occupied the control information scheduling area.

15. The apparatus according to claim 14, wherein the indication information comprises identification information, and the identification information is used to identify that the downlink data is to be transmitted after the indication information; and the obtaining unit is specifically configured to:
obtain the downlink data after the indication information according to the identification information.

16. The apparatus according to claim 14, wherein the indication information comprises location indication information, and the location indication information is used to instruct the user equipment to send the uplink data at a first location of the spare resource of the uplink control information scheduling area and/or receive the downlink data at a second location of the spare resource of the downlink control information scheduling area; and the obtaining unit is specifically configured to:
according to the location indication information, send the uplink data at the first location and/or receive the downlink data at the second location.

## Patentansprüche

1. Datenübertragungsverfahren basierend auf Zeitduplexen, das Folgendes umfasst:
Bestimmen (S210), ob es ein zu planendes Benutzergerät in einem ersten Übertragungszeitintervall gibt, wobei eine Rahmenstruktur, die in dem ersten Übertragungszeitintervall verwendet wird, einen Datenplanungsbereich und einen Steuerinformationsplanungsbereich umfasst, wobei der Steuerinformationsplanungsbereich einen Uplink-Steuerinformationsplanungsbereich und einen Downlink-Steuerinformationsplanungsbereich umfasst, wobei der Datenplanungsbereich verwendet wird, um Daten zu tragen, der Uplink-Steuerinformationsplanungsbereich verwendet wird, um Uplink-Steuerinformationen zu tragen, und der Downlink-Steuerinformationsplanungsbereich verwendet wird, um Downlink-Steuerinformationen zu tragen;
wenn bestimmt wird, dass es ein zu planendes Benutzergerät in dem ersten Übertragungszeitintervall gibt, Bestimmen (S220), ob es irgendeine freie Ressource in dem Steuerinformationsplanungsbereich gibt; und
nachdem bestimmt wurde, dass es noch eine freie Ressource in dem Steuerinformationsplanungsbereich gibt, Senden (S230) von Indikationsinformationen an das zu planende Benutzergerät, wobei die Indikationsinformationen verwendet werden, um das Benutzergerät zum Senden von Uplink-Daten auf einer freien Ressource des Uplink-Steuerinformationsplanungsbereichs und/oder zum Erhalten von Downlink-Daten auf einer freien Ressource des Downlink-Steuerinformationsplanungsbereichs anzuweisen;
wobei der Datenplanungsbereich auf einen Kanal verweist, der eine Datenübertragung trägt, und der Steuerinformationsplanungsbereich auf einen Kanal verweist, der Steuerinformationen trägt, wobei der Downlink-Datenplanungsbereich ein physischer gemeinsam genutzter Downlink-Kanal, PDSCH (Physical Downlink Shared Channel), ist, der Uplink-Datenplanungsbereich ein physischer gemeinsam genutzter Uplink-Kanal, PUSCH (Physical Uplink Shared Channel), ist und der Steuerinformationsplanungsbereich ein physischer Downlink-Steuerkanal, PDCCH (Physical Downlink Control Channel), oder ein physischer Uplink-Steuerkanal, PUCCH (Physical Uplink Control Channel), ist,
wobei die freie Ressource in dem Steuerinformationsplanungsbereich eine verbleibende Ressource in dem Steuerinformationsplanungsbereich ist, nachdem Planungsinformationen, die dem PDSCH und/oder PUSCH in dem ersten Übertragungszeitintervall entsprechen, den Steuerinformationsplanungsbereich belegt haben.

2. Verfahren nach Anspruch 1, wobei der Datenplanungsbereich ein Uplink-Datenplanungsbereich ist und das Bestimmen, ob es irgendeine freie Ressource in dem Steuerinformationsplanungsbereich gibt, Folgendes umfasst:
Bestimmen, ob Ressourcen in dem Uplink-Datenplanungsbereich ungenügend sind; und
wenn bestimmt wird, dass die Ressourcen in dem Uplink-Datenplanungsbereich ungenügend sind, Bestimmen, ob es irgendeine freie Ressource in dem Uplink-Steuerinformationsplanungsbereich gibt.

3. Verfahren nach Anspruch 1, wobei der Datenplanungsbereich ein Downlink-Datenplanungsbereich ist und das Bestimmen, ob es irgendeine freie Ressource in dem Steuerinformationsplanungsbereich gibt, Folgendes umfasst:
Bestimmen, ob Ressourcen in dem Downlink-Datenplanungsbereich ungenügend sind; und
wenn bestimmt wird, dass die Ressourcen in dem Downlink-Datenplanungsbereich ungenügend sind, Bestimmen, ob es irgendeine freie Ressource in dem Downlink-Steuerinformationsplanungsbereich gibt.

4. Verfahren nach einem der Ansprüche 1 bis 3, wobei die Indikationsinformationen Positionsindikationsinformationen umfassen und die Positionsindikationsinformationen verwendet werden, um das Benutzergerät zum Senden der Uplink-Daten bei einer ersten Position der freien Ressource des Uplink-Steuerinformationsplanungsbereichs und/oder zum Empfangen der Downlink-Daten bei einer zweiten Position der freien Ressource des Downlink-Steuerinformationsplanungsbereichs anzuweisen.

5. Verfahren nach einem der Ansprüche 1 bis 3, wobei die Indikationsinformationen Identifikationsinformationen umfassen und die Identifikationsinformationen verwendet werden, um zu identifizieren, dass die Downlink-Daten nach den Indikationsinformationen zu übertragen sind.

6. Datenübertragungsverfahren basierend auf Zeitduplexen, das Folgendes umfasst:
Empfangen (S510) von Indikationsinformationen, die durch eine Basisstation in einem ersten Übertragungszeitintervall gesendet werden, wobei eine Rahmenstruktur, die in dem ersten Übertragungszeitintervall verwendet wird, einen Datenplanungsbereich, einen Uplink- Steuerinformationsplanungsbereich und einen Downlink-Steuerinformationsplanungsbereich umfasst, wobei der Datenplanungsbereich verwendet wird, um Daten zu tragen, der Uplink-Steuerinformationsplanungsbereich verwendet wird, um Uplink-Steuerinformationen zu tragen, und der Downlink-Steuerinformationsplanungsbereich verwendet wird, um Downlink-Steuerinformationen zu tragen, und wobei die Indikationsinformationen verwendet werden, um ein Benutzergerät zum Senden von zu übertragenden Uplink-Daten auf einer freien Ressource des Uplink-Steuerinformationsplanungsbereichs und/oder zum Erhalten von zu übertragenden Downlink-Daten auf einer freien Ressource des Downlink-Steuerinformationsplanungsbereichs anzuweisen; und
gemäß den Indikationsinformationen Senden (S520) der Uplink-Daten auf der freien Ressource des Uplink-Steuerinformationsplanungsbereichs und/oder Erhalten der Downlink-Daten auf der freien Ressource des Downlink-Steuerinformati onsplanungsberei chs;
wobei der Datenplanungsbereich auf einen Kanal verweist, der eine Datenübertragung trägt, und der Steuerinformationsplanungsbereich auf einen Kanal verweist, der Steuerinformationen trägt, wobei der Downlink-Datenplanungsbereich ein physischer gemeinsam genutzter Downlink-Kanal, PDSCH, ist, der Uplink-Datenplanungsbereich ein physischer gemeinsam genutzter Uplink-Kanal, PUSCH, ist und der Steuerinformationsplanungsbereich ein physischer Downlink-Steuerkanal, PDCCH, oder ein physischer Uplink-Steuerkanal, PUCCH, ist,
wobei die freie Ressource in dem Steuerinformationsplanungsbereich eine verbleibende Ressource in dem Steuerinformationsplanungsbereich ist, nachdem Planungsinformationen, die dem PDSCH und/oder PUSCH in dem ersten Übertragungszeitintervall entsprechen, den Steuerinformationsplanungsbereich belegt haben.

7. Verfahren nach Anspruch 6, wobei die Indikationsinformationen Identifikationsinformationen umfassen und die Identifikationsinformationen verwendet werden, um zu identifizieren, dass die Downlink-Daten nach den Indikationsinformationen zu übertragen sind, und das Senden der Uplink-Daten auf der freien Ressource des Uplink-Steuerinformationsplanungsbereichs und/oder das Erhalten der Downlink-Daten von der freien Ressource des Downlink-Steuerinformationsplanungsbereichs Folgendes umfasst:
Erhalten der Downlink-Daten nach den Indikationsinformationen gemäß den Identifikationsinformati onen.

8. Verfahren nach Anspruch 6, wobei die Indikationsinformationen Positionsindikationsinformationen umfassen und die Positionsindikationsinformationen verwendet werden, um das Benutzergerät zum Senden der Uplink-Daten bei einer ersten Position der freien Ressource des Uplink-Steuerinformationsplanungsbereichs und/oder zum Empfangen der Downlink-Daten bei einer zweiten Position der freien Ressource des Downlink-Steuerinformationsplanungsbereichs anzuweisen; und das Senden der Uplink-Daten auf der freien Ressource des Uplink-Steuerinformationsplanungsbereichs und/oder das Erhalten der Downlink-Daten auf der freien Ressource des Downlink-Steuerinformationsplanungsbereichs Folgendes umfasst:
gemäß den Positionsindikationsinformationen Senden der Uplink-Daten bei der ersten Position und/oder Empfangen der Downlink-Daten bei der zweiten Position.

9. Datenübertragungseinrichtung basierend auf Zeitduplexen, die Folgendes umfasst:
eine erste Bestimmungseinheit (610), die zum Bestimmen konfiguriert ist, ob es ein zu planendes Benutzergerät in einem ersten Übertragungszeitintervall gibt, wobei eine Rahmenstruktur, die in dem ersten Übertragungszeitintervall verwendet wird, einen Datenplanungsbereich und einen Steuerinformationsplanungsbereich umfasst, wobei der Steuerinformationsplanungsbereich einen Uplink-Steuerinformationsplanungsbereich und einen Downlink-Steuerinformationsplanungsbereich umfasst, wobei der Datenplanungsbereich verwendet wird, um Daten zu tragen, der Uplink-Steuerinformationsplanungsbereich verwendet wird, um Uplink-Steuerinformationen zu tragen, und der Downlink-Steuerinformationsplanungsbereich verwendet wird, um Downlink-Steuerinformationen zu tragen;
eine zweite Bestimmungseinheit (620), die zum Bestimmen, wenn die erste Bestimmungseinheit bestimmt, dass es ein zu planendes Benutzergerät in dem ersten Übertragungszeitintervall gibt, ob es irgendeine freie Ressource in dem Steuerinformationsplanungsbereich gibt, konfiguriert ist; und
eine Sendeeinheit (620), die zum Senden, nachdem die zweite Bestimmungseinheit bestimmt hat, dass es noch eine freie Ressource in dem Steuerinformationsplanungsbereich gibt, von Indikationsinformationen an das zu planende Benutzergerät konfiguriert ist, wobei die Indikationsinformationen verwendet werden, um das Benutzergerät zum Senden von Uplink-Daten auf einer freien Ressource des Uplink-Steuerinformationsplanungsbereichs und/oder zum Erhalten von Downlink-Daten auf einer freien Ressource des Downlink-Steuerinformationsplanungsbereichs anzuweisen;
wobei der Datenplanungsbereich auf einen Kanal verweist, der eine Datenübertragung trägt, und der Steuerinformationsplanungsbereich auf einen Kanal verweist, der Steuerinformationen trägt, wobei der Downlink-Datenplanungsbereich ein physischer gemeinsam genutzter Downlink-Kanal, PDSCH, ist, der Uplink-Datenplanungsbereich ein physischer gemeinsam genutzter Uplink-Kanal, PUSCH, ist und der Steuerinformationsplanungsbereich ein physischer Downlink-Steuerkanal, PDCCH, oder ein physischer Uplink-Steuerkanal, PUCCH, ist,
wobei die freie Ressource in dem Steuerinformationsplanungsbereich eine verbleibende Ressource in dem Steuerinformationsplanungsbereich ist, nachdem Planungsinformationen, die dem PDSCH und/oder PUSCH in dem ersten Übertragungszeitintervall entsprechen, den Steuerinformationsplanungsbereich belegt haben.

10. Einrichtung nach Anspruch 9, wobei der Datenplanungsbereich ein Uplink-Datenplanungsbereich ist und die zweite Bestimmungseinheit speziell zu Folgendem konfiguriert ist:
Bestimmen, ob Ressourcen in dem Uplink-Datenplanungsbereich ungenügend sind; und
wenn bestimmt wird, dass die Ressourcen in dem Uplink-Datenplanungsbereich ungenügend sind, Bestimmen, ob es irgendeine freie Ressource in dem Uplink-Steuerinformationsplanungsbereich gibt.

11. Einrichtung nach Anspruch 9, wobei der Datenplanungsbereich ein Downlink-Datenplanungsbereich ist und die zweite Bestimmungseinheit speziell zu Folgendem konfiguriert ist:
Bestimmen, ob Ressourcen in dem Downlink-Datenplanungsbereich ungenügend sind; und
wenn bestimmt wird, dass die Ressourcen in dem Downlink-Datenplanungsbereich ungenügend sind, Bestimmen, ob es irgendeine freie Ressource in dem Downlink-Steuerinformationsplanungsbereich gibt.

12. Einrichtung nach einem der Ansprüche 9 bis 11, wobei die Indikationsinformationen Positionsindikationsinformationen umfassen und die Positionsindikationsinformationen verwendet werden, um das Benutzergerät zum Senden der Uplink-Daten bei einer ersten Position der freien Ressource des Uplink-Steuerinformationsplanungsbereichs und/oder zum Empfangen der Downlink-Daten bei einer zweiten Position der freien Ressource des Downlink-Steuerinformationsplanungsbereichs anzuweisen.

13. Einrichtung nach einem der Ansprüche 9 bis 11, wobei die Indikationsinformationen Identifikationsinformationen umfassen und die Identifikationsinformationen verwendet werden, um zu identifizieren, dass die Downlink-Daten nach den Indikationsinformationen zu übertragen sind.

14. Datenübertragungseinrichtung basierend auf Zeitduplexen, die Folgendes umfasst:
eine Empfangseinheit (710), die zum Empfangen von Indikationsinformationen, die durch eine Basisstation in einem ersten Übertragungszeitintervall gesendet werden, konfiguriert ist, wobei eine Rahmenstruktur, die in dem ersten Übertragungszeitintervall verwendet wird, einen Datenplanungsbereich, einen Uplink-Steuerinformationsplanungsbereich und einen Downlink-Steuerinformationsplanungsbereich umfasst, wobei der Datenplanungsbereich verwendet wird, um Daten zu tragen, der Uplink-Steuerinformationsplanungsbereich verwendet wird, um Uplink-Steuerinformationen zu tragen, der Downlink-Steuerinformationsplanungsbereich verwendet wird, um Downlink-Steuerinformationen zu tragen, und die Indikationsinformationen verwendet werden, um ein Benutzergerät zum Senden von zu übertragenden Uplink-Daten auf einer freien Ressource des Uplink-Steuerinformationsplanungsbereichs und/oder zum Erhalten von zu übertragenden Downlink-Daten auf einer freien Ressource des Downlink-Steuerinformationsplanungsbereichs anzuweisen; und
eine Erhalteeinheit (720), die zum Senden, gemäß den Indikationsinformationen, der Uplink-Daten auf der freien Ressource des Uplink-Steuerinformationsplanungsbereichs und/oder Erhalten der Downlink-Daten auf der freien Ressource des Downlink-Steuerinformationsplanungsbereichs konfiguriert ist; wobei der Datenplanungsbereich auf einen Kanal verweist, der eine Datenübertragung trägt, und der Steuerinformationsplanungsbereich auf einen Kanal verweist, der Steuerinformationen trägt, wobei der Downlink-Datenplanungsbereich ein physischer gemeinsam genutzter Downlink-Kanal, PDSCH, ist, der Uplink-Datenplanungsbereich ein physischer gemeinsam genutzter Uplink-Kanal, PUSCH, ist und der Steuerinformationsplanungsbereich ein physischer Downlink-Steuerkanal, PDCCH, oder ein physischer Uplink-Steuerkanal, PUCCH, ist,
wobei die freie Ressource in dem Steuerinformationsplanungsbereich eine verbleibende Ressource in dem Steuerinformationsplanungsbereich ist, nachdem Planungsinformationen, die dem PDSCH und/oder PUSCH in dem ersten Übertragungszeitintervall entsprechen, den Steuerinformationsplanungsbereich belegt haben.

15. Einrichtung nach Anspruch 14, wobei die Indikationsinformationen Identifikationsinformationen umfassen und die Identifikationsinformationen verwendet werden, um zu identifizieren, dass die Downlink-Daten nach den Indikationsinformationen zu übertragen sind; und die Erhalteeinheit speziell zu Folgendem konfiguriert ist:
Erhalten der Downlink-Daten nach den Indikationsinformationen gemäß den Identifikationsinformati onen.

16. Einrichtung nach Anspruch 14, wobei die Indikationsinformationen Positionsindikationsinformationen umfassen und die Positionsindikationsinformationen verwendet werden, um das Benutzergerät zum Senden der Uplink-Daten bei einer ersten Position der freien Ressource des Uplink-Steuerinformationsplanungsbereichs und/oder zum Empfangen der Downlink-Daten bei einer zweiten Position der freien Ressource des Downlink-Steuerinformationsplanungsbereichs anzuweisen; und die Erhalteeinheit speziell zu Folgendem konfiguriert ist:
gemäß den Positionsindikationsinformationen Senden der Uplink-Daten bei der ersten Position und/oder Empfangen der Downlink-Daten bei der zweiten Position.

## Revendications

1. Procédé de transmission de données basée sur un duplexage par répartition dans le temps, consistant à :
déterminer (S210) s'il y a un équipement d'utilisateur à programmer dans un premier intervalle de temps de transmission, une structure de trame utilisée dans le premier intervalle de temps de transmission comprenant une zone de programmation de données et une zone de programmation d'information de contrôle, la zone de programmation d'information de contrôle comprenant une zone de programmation d'information de contrôle en liaison montante et une zone de programmation d'information de contrôle en liaison descendante, la zone de programmation de données étant utilisée pour transporter des données, la zone de programmation d'information de contrôle en liaison montante étant utilisée pour transporter une information de contrôle en liaison montante et la zone de programmation d'information de contrôle en liaison descendante étant utilisée pour transporter une information de contrôle en liaison descendante ;
quand il est déterminé qu'il y a un équipement d'utilisateur à programmer dans le premier intervalle de temps de transmission, déterminer (S220) s'il y a une quelconque ressource de rechange dans la zone de programmation d'information de contrôle ; et
une fois qu'il est déterminé qu'il y a encore une ressource de rechange dans la zone de programmation d'information de contrôle, envoyer (S230) une information d'indication à l'équipement d'utilisateur à programmer, l'information d'indication étant utilisée pour donner l'instruction à l'équipement d'utilisateur d'envoyer des données en liaison montante sur une ressource de rechange de la zone de programmation d'information de contrôle en liaison montante et/ou d'obtenir des données en liaison descendante sur une ressource de rechange de la zone de programmation d'information de contrôle en liaison descendante ;
la zone de programmation de données se rapportant à un canal transportant une transmission de données, et la zone de programmation d'information de contrôle se rapportant à un canal transportant une information de contrôle, la zone de programmation de données en liaison descendante étant un canal partagé physique en liaison descendante (PDSCH), la zone de programmation de données en liaison montante étant un canal partagé physique en liaison montante (PUSCH) et la zone de programmation d'information de contrôle étant un canal de contrôle physique en liaison descendante (PDCCH) ou un canal de contrôle physique en liaison montante (PUCCH),
la ressource de rechange dans la zone de programmation d'information de contrôle étant une ressource restante dans la zone de programmation d'information de contrôle après l'occupation de la zone de programmation d'information de contrôle par une information de programmation correspondant à un PDSCH et/ou à un PUSCH dans le premier intervalle de temps de transmission.

2. Procédé selon la revendication 1, dans lequel la zone de programmation de données est une zone de programmation de données en liaison montante, et l'étape consistant à déterminer s'il y a une quelconque ressource de rechange dans la zone de programmation d'information de contrôle consiste à :
déterminer si des ressources sont insuffisantes dans la zone de programmation de données en liaison montante ; et
quand il est déterminé que les ressources sont insuffisantes dans la zone de programmation de données en liaison montante, déterminer s'il y a une quelconque ressource de rechange dans la zone de programmation d'information de contrôle en liaison montante.

3. Procédé selon la revendication 1, dans lequel la zone de programmation de données est une zone de programmation de données en liaison descendante, et l'étape consistant à déterminer s'il y a une quelconque ressource de rechange dans la zone de programmation d'information de contrôle consiste à :
déterminer si des ressources sont insuffisantes dans la zone de programmation de données en liaison descendante ; et
quand il est déterminé que les ressources sont insuffisantes dans la zone de programmation de données en liaison descendante, déterminer s'il y a une quelconque ressource de rechange dans la zone de programmation d'information de contrôle en liaison descendante.

4. Procédé selon l'une quelconque des revendications 1 à 3, dans lequel l'information d'indication comprend une information d'indication de localisation, et l'information d'indication de localisation est utilisée pour donner l'instruction à l'équipement d'utilisateur d'envoyer les données en liaison montante au niveau d'une première localisation de la ressource de rechange de la zone de programmation d'information de contrôle en liaison montante et/ou de recevoir les données en liaison descendante au niveau d'une seconde localisation de la ressource de rechange de la zone de programmation d'information de contrôle en liaison descendante.

5. Procédé selon l'une quelconque des revendications 1 à 3, dans lequel l'information d'indication comprend une information d'identification, et l'information d'identification est utilisée pour identifier que les données en liaison descendante doivent être transmises après l'information d'indication.

6. Procédé de transmission de données basée sur un duplexage par répartition dans le temps, consistant à :
recevoir (S510) une information d'indication envoyée par une station de base dans un premier intervalle de temps de transmission, une structure de trame utilisée dans le premier intervalle de temps de transmission comprenant une zone de programmation de données, une zone de programmation d'information de contrôle en liaison montante et une zone de programmation d'information de contrôle en liaison descendante, la zone de programmation de données étant utilisée pour transporter des données, la zone de programmation d'information de contrôle en liaison montante étant utilisée pour transporter une information de contrôle en liaison montante, la zone de programmation d'information de contrôle en liaison descendante étant utilisée pour transporter une information de contrôle en liaison descendante, et l'information d'indication étant utilisée pour donner l'instruction à l'équipement d'utilisateur d'envoyer des données en liaison montante à transmettre sur une ressource de rechange de la zone de programmation d'information de contrôle en liaison montante et/ou d'obtenir des données en liaison descendante à transmettre sur une ressource de rechange de la zone de programmation d'information de contrôle en liaison descendante ; et
selon l'information d'indication, envoyer (S520) les données en liaison montante sur la ressource de rechange de la zone de programmation d'information de contrôle en liaison montante et/ou obtenir les données en liaison descendante sur la ressource de rechange de la zone de programmation d'information de contrôle en liaison descendante ;
la zone de programmation de données se rapportant à un canal transportant une transmission de données, et la zone de programmation d'information de contrôle se rapportant à un canal transportant une information de contrôle, la zone de programmation de données en liaison descendante étant un canal partagé physique en liaison descendante (PDSCH), la zone de programmation de données en liaison montante étant un canal partagé physique en liaison montante (PUSCH) et la zone de programmation d'information de contrôle étant un canal de contrôle physique en liaison descendante (PDCCH) ou un canal de contrôle physique en liaison montante (PUCCH),
la ressource de rechange dans la zone de programmation d'information de contrôle étant une ressource restante dans la zone de programmation d'information de contrôle après l'occupation de la zone de programmation d'information de contrôle par une information de programmation correspondant à un PDSCH et/ou à un PUSCH dans le premier intervalle de temps de transmission.

7. Procédé selon la revendication 6, dans lequel l'information d'indication comprend une information d'identification, et l'information d'identification est utilisée pour identifier que les données en liaison descendante doivent être transmises après l'information d'indication, et dans lequel l'envoi des données en liaison montante sur la ressource de rechange de la zone de programmation d'information de contrôle en liaison montante et/ou l'obtention des données en liaison descendante de la ressource de rechange de la zone de programmation d'information de contrôle en liaison descendante consistent à :
obtenir les données en liaison descendante après l'information d'indication selon l'information d'identification.

8. Procédé selon la revendication 6, dans lequel l'information d'indication comprend une information d'indication de localisation, et l'information d'indication de localisation est utilisée pour donner l'instruction à l'équipement d'utilisateur d'envoyer les données en liaison montante au niveau d'une première localisation de la ressource de rechange de la zone de programmation d'information de contrôle en liaison montante et/ou de recevoir les données en liaison descendante au niveau d'une seconde localisation de la ressource de rechange de la zone de programmation d'information de contrôle en liaison descendante ; et dans lequel l'envoi des données en liaison montante sur la ressource de rechange de la zone de programmation d'information de contrôle en liaison montante et/ou l'obtention des données en liaison descendante sur la ressource de rechange de la zone de programmation d'information de contrôle en liaison descendante consistent à :
selon l'information d'indication de localisation, envoyer les données en liaison montante au niveau de la première localisation et/ou recevoir les données en liaison descendante au niveau de la seconde localisation.

9. Appareil de transmission de données basée sur un duplexage par répartition dans le temps, comprenant :
une première unité de détermination (610), configurée pour déterminer s'il y a un équipement d'utilisateur à programmer dans un premier intervalle de temps de transmission, une structure de trame utilisée dans le premier intervalle de temps de transmission comprenant une zone de programmation de données et une zone de programmation d'information de contrôle, la zone de programmation d'information de contrôle comprenant une zone de programmation d'information de contrôle en liaison montante et une zone de programmation d'information de contrôle en liaison descendante, la zone de programmation de données étant utilisée pour transporter des données, la zone de programmation d'information de contrôle en liaison montante étant utilisée pour transporter une information de contrôle en liaison montante et la zone de programmation d'information de contrôle en liaison descendante étant utilisée pour transporter une information de contrôle en liaison descendante ;
une seconde unité de détermination (620), configurée pour, quand la première unité de détermination détermine qu'il y a un équipement d'utilisateur à programmer dans le premier intervalle de temps de transmission, déterminer s'il y a une quelconque ressource de rechange dans la zone de programmation d'information de contrôle ; et une unité d'envoi (630), configurée pour, une fois que la seconde unité de détermination détermine qu'il y a encore une ressource de rechange dans la zone de programmation d'information de contrôle, envoyer une information d'indication à l'équipement d'utilisateur à programmer, l'information d'indication étant utilisée pour donner l'instruction à l'équipement d'utilisateur d'envoyer des données en liaison montante sur une ressource de rechange de la zone de programmation d'information de contrôle en liaison montante et/ou d'obtenir des données en liaison descendante sur une ressource de rechange de la zone de programmation d'information de contrôle en liaison descendante ;
la zone de programmation de données se rapportant à un canal transportant une transmission de données, et la zone de programmation d'information de contrôle se rapportant à un canal transportant une information de contrôle, la zone de programmation de données en liaison descendante étant un canal partagé physique en liaison descendante (PDSCH), la zone de programmation de données en liaison montante étant un canal partagé physique en liaison montante (PUSCH) et la zone de programmation d'information de contrôle étant un canal de contrôle physique en liaison descendante (PDCCH) ou un canal de contrôle physique en liaison montante (PUCCH),
la ressource de rechange dans la zone de programmation d'information de contrôle étant une ressource restante dans la zone de programmation d'information de contrôle après l'occupation de la zone de programmation d'information de contrôle par une information de programmation correspondant à un PDSCH et/ou à un PUSCH dans le premier intervalle de temps de transmission.

10. Appareil selon la revendication 9, dans lequel la zone de programmation de données est une zone de programmation de données en liaison montante, et la seconde unité de détermination est spécifiquement configurée pour :
déterminer si des ressources sont insuffisantes dans la zone de programmation de données en liaison montante ; et
quand il est déterminé que les ressources sont insuffisantes dans la zone de programmation de données en liaison montante, déterminer s'il y a une quelconque ressource de rechange dans la zone de programmation d'information de contrôle en liaison montante.

11. Appareil selon la revendication 9, dans lequel la zone de programmation de données est une zone de programmation de données en liaison descendante, et la seconde unité de détermination est spécifiquement configurée pour :
déterminer si des ressources sont insuffisantes dans la zone de programmation de données en liaison descendante ; et
quand il est déterminé que les ressources sont insuffisantes dans la zone de programmation de données en liaison descendante, déterminer s'il y a une quelconque ressource de rechange dans la zone de programmation d'information de contrôle en liaison descendante.

12. Appareil selon l'une quelconque des revendications 9 à 11, dans lequel l'information d'indication comprend une information d'indication de localisation, et l'information d'indication de localisation est utilisée pour donner l'instruction à l'équipement d'utilisateur d'envoyer les données en liaison montante au niveau d'une première localisation de la ressource de rechange de la zone de programmation d'information de contrôle en liaison montante et/ou de recevoir les données en liaison descendante au niveau d'une seconde localisation de la ressource de rechange de la zone de programmation d'information de contrôle en liaison descendante.

13. Appareil selon l'une quelconque des revendications 9 à 11, dans lequel l'information d'indication comprend une information d'identification, et l'information d'identification est utilisée pour identifier que les données en liaison descendante doivent être transmises après l'information d'indication.

14. Appareil de transmission de données basée sur un duplexage par répartition dans le temps, comprenant :
une unité de réception (710), configurée pour recevoir une information d'indication envoyée par une station de base dans un premier intervalle de temps de transmission, une structure de trame utilisée dans le premier intervalle de temps de transmission comprenant une zone de programmation de données, une zone de programmation d'information de contrôle en liaison montante et une zone de programmation d'information de contrôle en liaison descendante, la zone de programmation de données étant utilisée pour transporter des données, la zone de programmation d'information de contrôle en liaison montante étant utilisée pour transporter une information de contrôle en liaison montante, la zone de programmation d'information de contrôle en liaison descendante étant utilisée pour transporter une information de contrôle en liaison descendante, et l'information d'indication étant utilisée pour donner l'instruction à l'équipement d'utilisateur d'envoyer des données en liaison montante à transmettre sur une ressource de rechange de la zone de programmation d'information de contrôle en liaison montante et/ou d'obtenir des données en liaison descendante à transmettre sur une ressource de rechange de la zone de programmation d'information de contrôle en liaison descendante ; et
une unité d'obtention (720), configurée pour, selon l'information d'indication, envoyer les données en liaison montante sur la ressource de rechange de la zone de programmation d'information de contrôle en liaison montante et/ou obtenir les données en liaison descendante sur la ressource de rechange de la zone de programmation d'information de contrôle en liaison descendante ;
la zone de programmation de données se rapportant à un canal transportant une transmission de données, et la zone de programmation d'information de contrôle se rapportant à un canal transportant une information de contrôle, la zone de programmation de données en liaison descendante étant un canal partagé physique en liaison descendante (PDSCH), la zone de programmation de données en liaison montante étant un canal partagé physique en liaison montante (PUSCH) et la zone de programmation d'information de contrôle étant un canal de contrôle physique en liaison descendante (PDCCH) ou un canal de contrôle physique en liaison montante (PUCCH),
la ressource de rechange dans la zone de programmation d'information de contrôle étant une ressource restante dans la zone de programmation d'information de contrôle après l'occupation de la zone de programmation d'information de contrôle par une information de programmation correspondant à un PDSCH et/ou à un PUSCH dans le premier intervalle de temps de transmission.

15. Appareil selon la revendication 14, dans lequel l'information d'indication comprend une information d'identification, et l'information d'identification est utilisée pour identifier que les données en liaison descendante doivent être transmises après l'information d'indication ; et dans lequel l'unité d'obtention est spécifiquement configurée pour :
obtenir les données en liaison descendante après l'information d'indication selon l'information d'identification.

16. Appareil selon la revendication 14, dans lequel l'information d'indication comprend une information d'indication de localisation, et l'information d'indication de localisation est utilisée pour donner l'instruction à l'équipement d'utilisateur d'envoyer les données en liaison montante au niveau d'une première localisation de la ressource de rechange de la zone de programmation d'information de contrôle en liaison montante et/ou de recevoir les données en liaison descendante au niveau d'une seconde localisation de la ressource de rechange de la zone de programmation d'information de contrôle en liaison descendante ; et dans lequel l'unité d'obtention est spécifiquement configurée pour :
selon l'information d'indication de localisation, envoyer les données en liaison montante au niveau de la première localisation et/ou recevoir les données en liaison descendante au niveau de la seconde localisation.
